(19) Europäisches Patentamt
European Patent Office
Office européen des brevets

(11) **EP 2 372 925 A1**

(12) **EUROPEAN PATENT APPLICATION**
published in accordance with Art. 153(4) EPC

(43) Date of publication:
**05.10.2011 Bulletin 2011/40**

(51) Int Cl.:
***H04B 7/04*** (2006.01)

(21) Application number: **08879256.9**

(22) Date of filing: **31.12.2008**

(86) International application number:
**PCT/CN2008/002150**

(87) International publication number:
**WO 2010/075640 (08.07.2010 Gazette 2010/27)**

(84) Designated Contracting States:
**AT BE BG CH CY CZ DE DK EE ES FI FR GB GR HR HU IE IS IT LI LT LU LV MC MT NL NO PL PT RO SE SI SK TR**

(71) Applicants:
- **Alcatel-Lucent Shanghai Bell Co., Ltd.**
  **Pudong Xinqu**
  **Shanghai 201206 (CN)**
- **Alcatel Lucent**
  **75008 Paris (FR)**

(72) Inventors:
- **SONG, Yang**
  **Pudong Jinqiao**
  **Shanghai 201206 (CN)**

- **ZHU, Xiaolong**
  **Pudong Jinqiao**
  **Shanghai 201206 (CN)**
- **LI, Dong**
  **Pudong Jinqiao**
  **Shanghai 201206 (CN)**

(74) Representative: **Dreiss**
**Patentanwälte**
**Gerokstrasse 1**
**70188 Stuttgart (DE)**

(54) **MULTIPLE BASE STATION UNITE PRE-CODING METHOD, MOBILE TERMINAL AND BASE STATION BASED ON CODEBOOK**

(57) The present invention provides a novel codebook-based multi-base station unite pre-coding scheme. In this invention, multiple cooperating base stations commonly transmit signals to a mobile terminal. The mobile terminal estimates a channel matrix of a unite MIMO channel from the multiple cooperating base stations, and selects the optimal pre-coding matrix index from the pre-coding matrix codebook based on the unite MIMO channel matrix and feeds it back to the multiple cooperating base stations. Each cooperating base station selects the optimal pre-coding matrix based on the received pre-coding matrix index and uses the corresponding portion of the pre-coding matrix to perform unite pre-coding on the data. Namely, the respective partial pre-coding matrixes as employed by all cooperating base stations together form the pre-coding matrix that is optimal to the mobile terminal, and the pre-coding matrix as used by respective cooperating base stations is a part of the optimal pre-coding matrix. By using the codebook-based multi-base station unite pre-coding scheme according to the present invention, the user performance is improved, the complexity of implementation is low, and the demand on network connecting the base stations is very low.

Fig.1

**Description**

Technical Field

The present invention relates to the communication technology, and more particularly, relates to a codebook-based multi-base station unite pre-coding method, a mobile terminal, and a base station.

DESCRIPTION OF THE RELATED ART

In a wireless communication system, the application of pre-coding technology has become increasingly prevalent. It first pre-codes a to-be-transmitted signal based on channel information before transmitting such that the signal is more suitable to the channel, thereby improving the link quality or throughput of the user. At present, the implementation of single-base station pre-coding technology may be divided into two categories: with downlink as an example, one method is that a service base station of a mobile terminal obtains the channel information of downlink MIMO channel through a pilot signal or an uplink sounding transmitted by the mobile terminal in TDD system, and then the service base station calculates a pre-coding matrix and pre-codes the data before transmitting; the other commonly-used method is a pre-coding codebook-based method, where the mobile terminal obtains the channel information of the downlink MIMO channel through downlink pilot signal, preamble, or midamble as transmitted from the base station, and then selects an optimal pre-coding matrix index number from the pre-coding matrix codebook and feeds it back to the service base station, and the service base station pre-codes the data before transmitting. However, a user at the boarder of a cell is still subjected to strong interference from a neighboring cell, thus the pre-coding technology unite application in combination with a multi-base station cooperating technology is proposed to mitigate the inter-cell interference.

In a multi-base station cooperating scenario, a plurality of base stations transmit signals to a same mobile terminal, for example, macro diversity, soft handoff, and multi-cell cooperating technology, such as network MIMO and cooperating MIMO. The pre-coding may also be applied among a plurality of base stations to further improve user performance. Hereinafter, all base stations that transmit data together to a mobile terminal are called "cooperating base stations" or "base stations," where only one thereof is a master base station," and the other cooperating base stations are called "slave base stations." Typically, the master base station is the service base station associated with the mobile terminal.

Generally, during downlink macro diversity and soft handover, the served mobile terminal is always located at the cell boarder. Two or more base stations transmit the same data to the mobile terminal at the same or different time-frequency resources. In this way, the mobile terminal realizes diversity combination reception and obtains diversity gain. If the cooperating base stations transmit data at the same time-frequency resource, the interference will be further decreased. In MIMO-enabled macro diversity handoff (MDHO) of WiMAX (IEEE 802.16e) system, all antennas of the cooperating base stations that participate in the macro diversity form an antenna array (antenna pool), and the cooperating base stations may transmit data in an MIMO manner to the mobile terminal based on a predetermined antenna selection mode. Further, any individual base station may further employ a pre-coding technology to transmit a signal to the mobile terminal in a closed-loop MIMO manner. For example, the IEEE 802.16m standard that is being formulated proposes a pre-coding codebook-based closed-loop macro diversity scheme: the mobile terminal selects the pre-coding matrix index number of each cooperating base station that transmits data to the mobile terminal and feeds this information back to the serving base station, and then the serving base station informs the corresponding cooperating base station of the pre-coding matrix index number as recommended to each cooperating base station. Thus, each cooperating base station may use its own pre-coding matrix to independently pre-code the transmitted data. It may be seen that in the case of macro diversity, an optimal pre-coding matrix is selected for each cooperating base station based on the MIMO channel from each cooperating base station to the mobile terminal, where each channel is only subjected to a closed-loop processing, while it is like an open-loop state between respective channels. Without using unite pre-coding among cooperating base stations, the space feature of the MIMO channel composed by multiple cooperating base stations and the mobile terminal (referred to as unite MIMO channel herein) cannot be fully utilized. Soft handoff is similar to the macro diversity.

The network MIMO regards all antennas of all cooperating base stations as a transmit antenna array, and generates a pre-coding matrix based on all the channel state information CSI (for example, the channel response matrix) between all cooperating base stations and the mobile terminal, thereby realizing unite pre-coding among multiple base stations to eliminate the co-channel interference among multiple users. Because the unite pre-coding of this technology considers the CSI between all base stations and all mobile terminals, theoretically, the network MIMO lowers the interference caused by the time-frequency resource multiplexing to the utmost and thus the performance is the optimal. The cost of the solution to achieve the optimal performance is the extremely high complexity of the large-scale pre-coding matrix calculation. Even worse, because each base station has to exchange relevant channel information and pre-coding matrix information on the network that connects the cooperating base stations, transmission of much information causes high consumption of network resources, which makes greater burden on the network, and transmission delay of such information will deteriorate the system performance.

SUMMARY OF THE INVENTION

The present invention provides a novel codebook-based multi-base station unite pre-coding scheme. In this invention, multiple cooperating base stations commonly transmit signals to a mobile terminal. The mobile terminal estimates a channel matrix of a unite MIMO channel from the multiple cooperating base stations, and selects the optimal pre-coding matrix index and feeds it back to the multiple cooperating base stations from a pre-coding matrix codebook based on the unite MIMO channel matrix. Each cooperating base station selects an optimal pre-coding matrix based on the received pre-coding matrix index and using a corresponding portion of the pre-coding matrix to perform unite pre-coding on the data. Namely, the respective partial pre-coding matrixes as employed by all cooperating base stations together form a pre-coding matrix that is optimal to the mobile terminal, and the pre-coding matrix as used by each cooperating base station is a part of the optimal pre-coding matrix. Based on different methods of estimating the channel matrix of the unite MIMO channel by the mobile terminal, the cooperating base stations may also use the selected optimal pre-coding matrix to code the data. In other words, the data is pre-coded with the same pre-coding matrix as employed by all cooperating base stations. By using the codebook-based multi-base station unite pre-coding scheme according to the present invention, the user performance is improved, the complexity of implementation is low, and the demand on the network connecting base stations is very low.

Further, the present invention further proposes an internal pre-coding scheme. Before performing the codebook-based multi-base station unite pre-coding, the inner pre-coding matrix for each base station is first determined, and then the mobile terminal estimates a unite equivalent channel matrix of the inner pre-coded multiple cooperating base stations and selects the optimal number from the pre-coding matrix codebook and feeds it back to multiple cooperating base stations based on the unite equivalent MIMO channel matrix. Each cooperating base station first performs unite pre-coding on the data, then uses the inner pre-coding matrix to perform inner pre-coding to the unite pre-coded data, and then transmits the data. The inner pre-coding is individual performed within each base station, which may further enhance the performance of the mobile terminal that is commonly served by the cooperating base stations. Besides, through the inner pre-coding process, the dimension of the pre-coding codebook may be decreased, the storage space for the pre-coding matrix codebook may be reduced, and the implementation complexity may be further lowered.

Specifically, according to one embodiment of the present invention, there is provided a codebook-based multi-base station unite pre-coding method, the method comprising: a mobile terminal estimates channels from different cooperating base stations and obtaining a unite channel matrix $\mathbf{H}_c$ ; the mobile terminal, based on the estimated unite channel matrix, selects an optimal unite pre-coding matrix $\mathbf{W}_c$ from the pre-coding matrix codebook; the mobile terminal feeds the index of the unite pre-coding matrix back to the cooperating base stations; the corresponding cooperating base station, based on the received unite pre-coding matrix index, selects a unite pre-coding matrix from the pre-coding matrix codebook, and performs unite pre-coding on the data using the unite pre-coding matrix before transmitting the data to the mobile terminal.

According to an alternative embodiment of the present invention, the mobile terminal estimates channels from different cooperating base stations and obtains the unite channel matrix $\mathbf{H}_c$ means that the mobile terminal directly estimates the channels from different cooperating base stations, the result of the channel estimation being the unite channel matrix $\mathbf{H}_c$.

According to an alternative embodiment of the present invention, the unite channel matrix $\mathbf{H}_c$ is an inner pre-coded equivalent unite channel matrix.

According to an alternative embodiment of the present invention, the mobile terminal estimates channels from different base stations to obtain the unite channel matrix $\mathbf{H}_c$ means that the mobile terminal estimates the channels from different cooperating base stations, respectively, obtains physical channel matrixes $\mathbf{H}_i$ from each cooperating base station to the mobile terminal, and combines each physical channel matrix to obtain the unite channel matrix $\mathbf{H}_c = [\mathbf{H}_1, \cdots, \mathbf{H}_K]$, wherein $K > 1$ indicates the number of cooperating base stations serving the mobile terminal, $1 \leq i \leq K$

According to an alternative embodiment of the present invention, the mobile terminal estimates channels from different base stations to obtain the unite channel matrix $\mathbf{H}_c$ means that the mobile terminal estimates the channels from different cooperating base stations, respectively, to directly obtain equivalent channel matrixes $\mathbf{H}_i \mathbf{W}_i^I$ from each cooperating base station to the mobile terminal, and combines each equivalent channel matrix to obtain the equivalent unite channel matrix

$$\mathbf{H}_c = [\mathbf{H}_1 \mathbf{W}_1^I, \cdots, \mathbf{H}_K \mathbf{W}_K^I],$$ wherein $K > 1$ indicates the number of cooperating base stations serving the mobile terminal, $1 \leq i \leq K$.

According to an alternative embodiment of the present invention, the mobile terminal estimates the channels from different base stations to obtain the unite channel matrix $\mathbf{H}_c$ means that the mobile terminal estimates the channels from different cooperating base stations to obtain physical channel matrixes $\mathbf{H}_i$; the mobile terminal receives signals from different cooperating base stations to obtain inner pre-coding matrixes $\mathbf{W}_i^I$; the mobile terminal multiples the inner pre-coding matrixes $\mathbf{W}_i^I$ witch the estimated physical channel matrixes $\mathbf{H}_i$, respectively, to obtain equivalent channel matrixes $\mathbf{H}_i\mathbf{W}_i^I$ from each cooperating base station after being inner pre-coded, and combines the equivalent channel matrixes from each cooperating base station to obtain the unite channel matrix

$$\mathbf{H}_c = [\mathbf{H}_1\mathbf{W}_1^I, \cdots, \mathbf{H}_K\mathbf{W}_K^I],$$

wherein $K > 1$ indicates the number of cooperating base stations serving the mobile terminal, $1 \leq i \leq K$.

According to an alternative embodiment of the present invention, the mobile terminal receives signals from different cooperating base stations to obtain inner pre-coding matrixes $\mathbf{W}_i^I$ means that the mobile terminal selects inner pre-coding matrixes $\mathbf{W}_i^I$ from the pre-coding matrix codebook based on the estimated physical channel matrixes $\mathbf{H}_i$.

According to an alternative embodiment of the present invention, the mobile terminal feeds the index of the unite pre-coding matrix to the base stations means that the mobile terminal directly feeds the index of the unite pre-coding matrix back to all cooperating base stations.

According to an alternative embodiment of the present invention, the mobile terminal feeds the index of the unite pre-coding matrix back to the base stations means that the mobile terminal feeds the index of the unite pre-coding matrix back to the master base station, and the master base station transmits the index of the unite pre-coding matrix to the slave base stations.

According to an alternative embodiment of the present invention, the index of the unite pre-coding matrix refers to the unite pre-coding matrix index and the inner pre-coding matrix index.

According to an alternative embodiment of the present invention, further, each cooperating base station performs unite pre-coding on the data by using the unite pre-coding matrix means performing unite pre-coding on the data by using the corresponding matrix block in the unite pre-coding matrix.

According to an alternative embodiment of the present invention, further, the unite pre-coded data is subjected to inner pre-coding using the inner pre-coding matrix before being transmitted to the mobile terminal.

According to an embodiment of the present invention, there is provided a mobile terminal, comprising: storing means, for storing at least one pre-coding matrix codebook; channel estimating means, for estimating channels from different cooperating base stations to obtain a unite channel matrix $\mathbf{H}_c$; pre-coding matrix selecting means, for selecting a unite pre-coding matrix from the pre-coding matrix codebook based on the estimated unite channel matrix; feeding back means, for feeding an index of the unite pre-coding matrix back to the cooperating base stations.

According to an alternative embodiment of the present invention, the channel estimating means is for directly estimating the channels from different cooperating base stations, the result of channel estimation being the unite channel matrix $\mathbf{H}_c$.

According to an alternative embodiment of the present invention, the unite channel matrix $\mathbf{H}_c$ obtained by the channel estimating means is an inner pre-coded equivalent unite channel matrix.

According to an alternative embodiment of the present invention, the channel estimating means is for estimating channels from different cooperating base stations respectively to obtain physical channel matrixes $\mathbf{H}_i$ from each cooperating channel to the mobile terminal; further, a channel matrix combining means is comprised, which is for combining each physical channel matrix to obtain the unite channel matrix $\mathbf{H}_c = [\mathbf{H}_1, \cdots, \mathbf{H}_k]$, wherein $K > 1$ indicates the number of cooperating base stations serving the mobile terminal, $1 \leq i \leq K$.

According to an alternative embodiment of the present invention, the channel estimating means is for estimating channels from different cooperating base stations to directly obtain the equivalent channel matrixes $\mathbf{H}_i\mathbf{W}_i^I$ from each cooperating base station to the mobile terminal ; further, a channel matrix combining means is comprised, which is for combining each equivalent channel matrix to obtain the equivalent unite channel matrix $\mathbf{H}_c = [\mathbf{H}_1\mathbf{W}_1^I, \cdots, \mathbf{H}_K\mathbf{W}_K^I]$, wherein $K > 1$ indicates the number of cooperating base stations serving the mobile terminal, $1 \leq i \leq K$.

According to an alternative embodiment of the present invention, the channel estimating means is for estimating the channels from different cooperating base stations to obtain the physical channel matrixes $\mathbf{H}_i$ from each cooperating base station; further, a matrix multiplying operation means is comprised, which is for multiplying the physical channel matrixes $\mathbf{H}_i$ with the inner pre-coding matrixes $\mathbf{W}_i^I$ from each cooperating base station, respectively, to obtain inner pre-coded equivalent channel matrixes $\mathbf{H}_i\mathbf{W}_i^I$; further, a channel matrix combining means is further comprised, which is for combining each equivalent channel matrix to obtain the equivalent unite channel matrix $\mathbf{H}_c = [\mathbf{H}_1\mathbf{W}_1^I, \cdots, \mathbf{H}_K\mathbf{W}_K^I]$, wherein $K > 1$ indicates the number of cooperating base stations serving the mobile terminal, $1 \leq i \leq K$.

According to an alternative embodiment of the present invention, an inner pre-coding matrix selecting means is further comprised, which is for selecting inner pre-coding matrixes $\mathbf{W}_i^I$ from the pre-coding matrix codebook, respectively, based on the physical channel matrixes $\mathbf{H}_i$ obtained from the channel estimating means: the matrix multiplying operation means is for multiplying the physical channel matrixes $\mathbf{H}_i$ with the inner pre-coding matrixes $\mathbf{W}_i^I$ as outputted from the corresponding pre-coding matrix selecting means, respectively, to obtain the inner-coded equivalent channel matrixes $\mathbf{H}_i\mathbf{W}_i^I$.

According to an alternative embodiment of the present invention, the feeding back means is for directly feeding the index of the unite pre-coding matrix to all cooperating base stations.

According to an alternative embodiment of the present invention, the feeding back means is for feeding the index of the unite pre-coding matrix to the master base station.

According to an alternative embodiment of the present invention, the feeding back means is further for feeding back indexes of the inner pre-coding matrixes $\mathbf{W}_i^I$.

According to an embodiment of the present invention, there is provided a base station, comprising: storing means, for storing at least one pre-coding matrix codebook; receiving means, for receiving a signal, the signal comprises information regarding at least one pre-coding matrix index; unite pre-coding matrix selecting means, for selecting an optimal unite pre-coding matrix from the pre-coding matrix codebook based on the unite pre-coding matrix index; unite pre-coding means, for performing unite pre-coding on the data by using the pre-coding matrix; sending means, for sending a pilot signal and unite pre-coded data.

According to an alternative embodiment of the present invention, the pre-coding matrix selecting means further comprises a matrix block selecting means, for selecting a matrix block corresponding to the present base station from the selected optimal pre-coding matrix as the optimal unite pre-coding matrix.

According to an alternative embodiment of the present invention, the receiving means is further for receiving information regarding at least one inner pre-coding matrix index and selecting a corresponding inner pre-coding matrix index as the inner pre-coding matrix index of the present base station; further, the base station further comprises an inner pre-coding matrix selecting means, for selecting an optimal inner pre-coding matrix from the pre-coding matrix codebook based on the inner pre-coding matrix index of the present base station.

According to an alternative embodiment of the present invention, an inner pre-coding matrix generating means is further comprised, which is for generating an inner pre-coding matrix based on the received signal.

According to an alternative embodiment of the present invention, an inner pre-coding means is further comprised, which is for performing inner pre-coding to the pilot signal and/or the unite pre-coded data by using the inner pre-coding matrix; the sending means is for sending the inner pre-coded pilot signal and/or data.

According to an embodiment of the present invention, a codebook-based multi-base station unite pre-coding matrix selection method is provided, comprising: the mobile terminal estimates channels from different cooperating base stations to obtain a unite channel matrix $\mathbf{H}_c$; the mobile terminal selects an optimal unite pre-coding matrix $\mathbf{W}_c$ from the pre-coding matrix codebook based on the estimated unite channel matrix; and the mobile terminal feeds an index of the unite pre-coding matrix back to the cooperating base stations.

According to an alternative embodiment of the present invention, the mobile terminal estimates channels from different cooperating base stations to obtain the unite channel matrix $\mathbf{H}_c$ means that the mobile terminal directly estimates the channels from different cooperating base stations, and the result of channel estimation being the unite channel matrix $\mathbf{H}_c$.

According to an alternative embodiment of the present invention, the unite channel matrix $\mathbf{H}_c$ is the inner pre-coded equivalent unite channel matrix.

According to an alternative embodiment of the present invention, the mobile terminal estimates channels from different base stations to obtain the unite channel matrix $\mathbf{H}_c$ means that the mobile terminal estimates channels from different cooperating base stations, respectively, to obtain physical channel matrixes $\mathbf{H}_i$ from each cooperating base station to the mobile terminal, combines each physical channel matrix to obtain the unite channel matrix $\mathbf{H}_c = [\mathbf{H}_1, \cdots, \mathbf{H}_k]$, wherein $K > 1$ indicates the number of cooperating base stations serving the mobile terminal, $1 \leq i \leq K$.

According to an alternative embodiment of the present invention, the mobile terminal estimates channels from different base stations to obtain the unite channel matrix $\mathbf{H}_c$ means that the mobile terminal estimates the channels from different cooperating base stations, respectively, to directly obtain equivalent channel matrixes $\mathbf{H}_i\mathbf{W}_i^I$ from each cooperating base station to the mobile terminal, combines each equivalent channel matrix to obtain an equivalent unite channel matrix

$$\mathbf{H}_c = [\mathbf{H}_1\mathbf{W}_1^I, \cdots, \mathbf{H}_K\mathbf{W}_K^I],$$ wherein $K > 1$ indicates the number of cooperating base stations serving the mobile terminal, $1 \leq i \leq K$.

According to an alternative embodiment of the present invention, the mobile terminal estimates channels from different base stations to obtain the unite channel matrix $\mathbf{H}_c$ means that the mobile terminal estimates channels from different cooperating base stations, respectively, to obtain physical channel matrixes $\mathbf{H}_i$; the mobile terminal receives signals from different cooperating base stations to obtain inner pre-coding matrixes $\mathbf{W}_i^I$; the mobile terminal multiples the inner pre-coding matrixes $\mathbf{W}_i^I$ witch the estimated physical channel matrixes $\mathbf{H}_i$, respectively, to obtain equivalent channel matrixes $\mathbf{H}_i \mathbf{W}_i^I$ from each cooperating base station after being inner pre-coded, and combines the equivalent channel matrix from each cooperating base station to obtain the unite channel matrix

$$\mathbf{H}_c = [\mathbf{H}_1 \mathbf{W}_1^I, \cdots, \mathbf{H}_K \mathbf{W}_K^I],$$

wherein $K>1$ indicates the number of cooperating base stations serving the mobile terminal, $1 \leq i \leq K$.

According to an alternative embodiment of the present invention, the mobile terminal receives signals from different cooperating base stations to obtain inner pre-coding matrixes $\mathbf{W}_i^I$ means that the mobile terminal selects inner pre-coding matrixes $\mathbf{W}_i^I$ from the pre-coding matrix codebook based on the estimated physical channel matrixes $\mathbf{H}_i$.

According to an alternative embodiment of the present invention, the mobile terminal feeds the index of the unite pre-coding matrix to the base stations means that the mobile terminal directly feeds the index of the unite pre-coding matrix back to all cooperating base stations.

According to an alternative embodiment of the present invention, the mobile terminal feeds the index of the unite pre-coding matrix to the base stations means that the mobile terminal feeds the index of the unite pre-coding matrix back to the master base station.

According to an alternative embodiments of the present invention, the index of the unite pre-coding matrix refers to the unite pre-coding matrix index and the inner pre-coding matrix index.

According to an embodiment of the present invention, a codebook-based base station pre-coding method is provided, comprising: the base station transmits a pilot signal; the base station receives a signal, the signal comprising information regarding at least one unite pre-coding matrix index; the base station selects an optimal unite pre-coding matrix from a pre-coding matrix codebook based on the unite pre-coding matrix index; the base station performs unite pre-coding on the data using the unite pre-coding matrix; the base station sends the unite coded data.

According to an alternative embodiment of the present invention, further, the base station selects a corresponding matrix block from the selected optimal unite pre-coding matrix as the optimal unite pre-coding matrix.

According to an alternative embodiment of the present invention, further, the base station further receives information regarding at least one inner pre-coding matrix index, selects a corresponding inner pre-coding matrix index as the inner pre-coding matrix index of the present base station, and selects the optimal inner pre-coding matrix from the pre-coding matrix codebook based on the inner pre-coding matrix index of the present base station.

According to an alternative embodiment of the present invention, the base station generates an inner pre-coding matrix based on the received signal.

According to an alternative embodiment of the present invention, further, the base station performs inner pre-coding on the pilot signal and/or unite pre-coded data by using the inner pre-coding matrix: and sends the inner pre-coded pilot signal and/or data.

By using the method, base station, and the mobile terminal according to the present invention, the user performance is improved, the complexity of implementation is low, and the demand on the network connecting base stations is very low,

BRIEF DESCRIPTION OF THE DRAWINGS

Other objectives and effects of the present invention will become much clearer and easier to understand through the following description with reference to the accompanying drawings and with more comprehensible understanding of the present invention, wherein:

Fig. 1 illustrates a system flow diagram according to one embodiment of the present invention;

Figs. 2a, 2b, 2c, 2d, 2e, and 2f illustrate a base station flow diagram according to an embodiment of the present invention, respectively;

Figs. 3a, 3b, 3c, 3d, 3e, and 3f illustrate a mobile terminal flow diagram according to an embodiment of the present invention, respectively;

Fig. 4a and Fig. 4b illustrate a schematic block diagram of the structure of a base station according to an embodiment of the present invention, respectively;

Fig. 5a and Fig. 5b illustrate a schematic block diagram of the structure of a mobile terminal according to an embodiment of the present invention, respectively;

In all of the above accompanying drawings, like reference numbers indicate same, like or corresponding features or functions.

DETAILED DESCRIPTION OF THE INVENTION

The embodiments of the present invention are described in detail with reference to the accompanying drawings.

For the sake of depiction, the embodiments of the present invention take two cooperating base stations as an example, where each base station has N transmit antennas, and the mobile terminal has M receive antennas. The physical channels from the master base station and slave base station to the mobile terminal are $H_1$ and $H_2$, respectively. The pre-coding matrix codebook may be pre-stored in the device according to standard criteria or transmitted to the mobile terminal from the base station through signaling. The case of more cooperating base stations serving one mobile terminal may be derived by those skilled in the art through simple expansion based on the following embodiments of present invention; the example of two cooperating base stations as employed in the embodiments of the present invention is used only for simplifying the explanation and should not be understood as limiting the present invention.

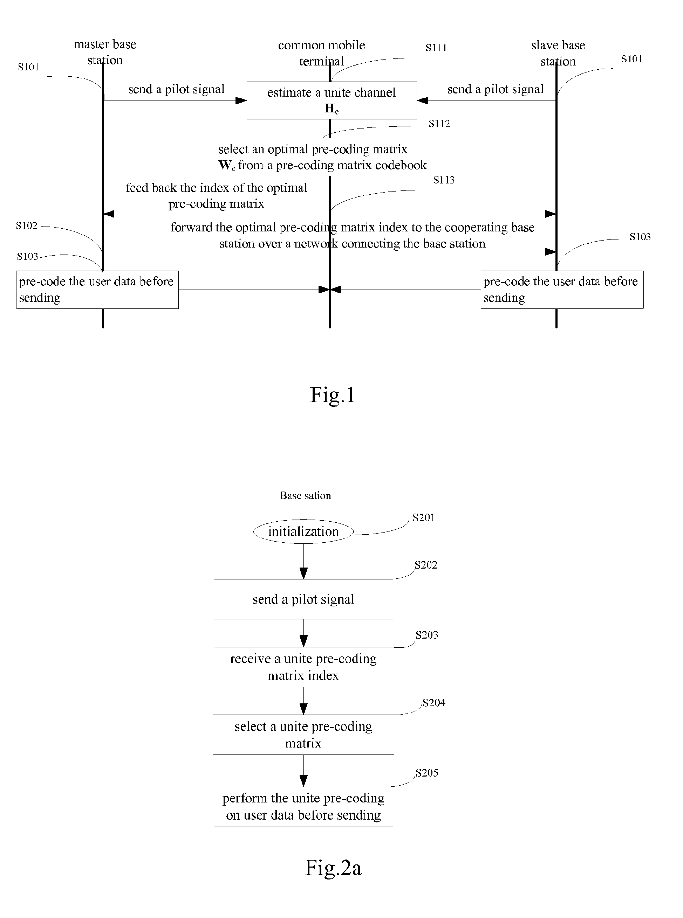

Fig. 1 illustrates a system flow diagram according to one embodiment of the present invention.

At step S101, base stations, comprising a master base station and a slave base station, send pilot signals to a mobile terminal; at step S111, the mobile terminal receives the pilot signals from the master base station and the slave base station and performs channel estimation on the received pilot signals to obtain a unite channel matrix $H_c$; at step S112, the mobile terminal selects an optimal unite pre-coding matrix $W_c$ from a pre-coding matrix codebook based on the estimated unite channel matrix; at step S113, the mobile terminal sends an index of the unite pre-coding matrix $W_c$ to the master base station; at step S102, the master base station sends the unite pre-coding matrix index to the slave base station; at step S103, the base station, based on the received unite pre-coding matrix index, selects a corresponding pre-coding matrix from the pre-coding matrix codebook and pre-codes the data before sending. According to another embodiment of the present invention, if the mobile terminal is connected to all of the main and slave base stations, then at step S113, the mobile terminal directly sends an index of the unite pre-coding matrix $W_c$ to the master base station and slave base station, without the need of performing step S102 by the master base station.

Fig. 1 illustrates a brief depiction of a system flow according to one of the embodiments of the present invention. According to different embodiments of the present invention and different system settings, each step in Fig. 1 has many variations. Wherein, at step S101, a base station may issue a pilot signal, or a pilot signal and an inner pre-coding matrix index, or inner pre-coded pilot signal: at step S111, according to the difference in received signals, the mobile terminal may obtain a unite channel matrix in a matrix sum form or an equivalent unite channel matrix, or a unite channel matrix in a matrix combination manner or an equivalent unite channel matrix; at step S113, the mobile terminal may only send the unite channel matrix index, or the unite channel matrix index and inner pre-coding matrix index; may directly send it to all cooperating base stations, or only to the master base station, while the master base station forwards it to the slave base station at step S102; at step S103, the base station may selects a unite pre-coding matrix $W_c$ or a corresponding block of the unite pre-coding matrix $W_c$ based on the unite pre-coding matrix index as the unite pre-coding matrix of the present base station, and directly performs unite pre-coding on the data or performing unite pre-coding on the data after being inner pre-coded, where the data from different base stations may be identical or different.

For the sake of simplicity, in the following embodiments of the present invention, the mobile terminal directly sends a pre-coding matrix index (unite pre-coding matrix index, or unite pre-coding matrix index and inner pre-coding matrix index) to all cooperating base stations, and the master base station needs not performing the forwarding step. However, if the system sets that no connection is established between the mobile terminal and the slave base station, then those skilled in the art may select the manner of sending from the mobile terminal to the master base station and then forwarding from the master base station to the slave base station according to the above depiction during specific implementation.

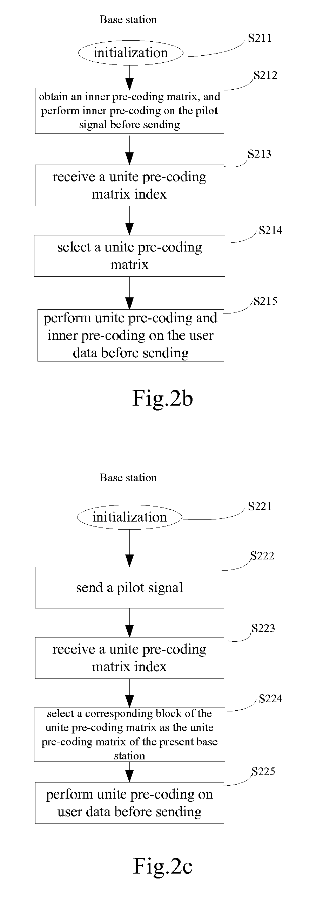

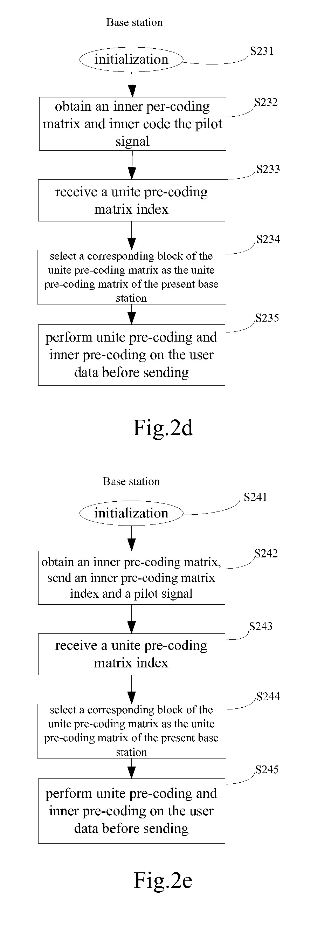

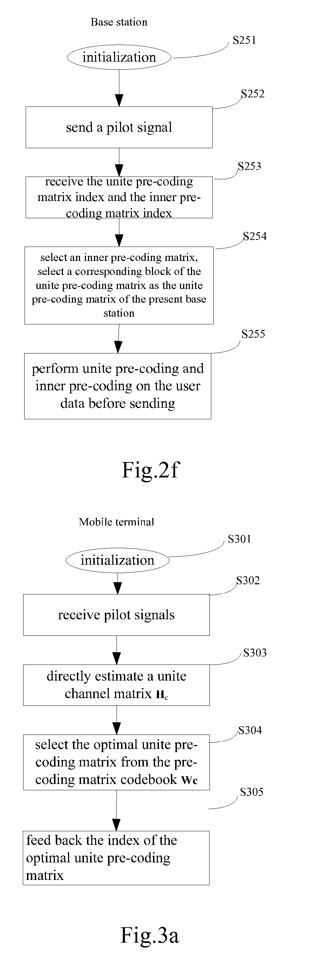

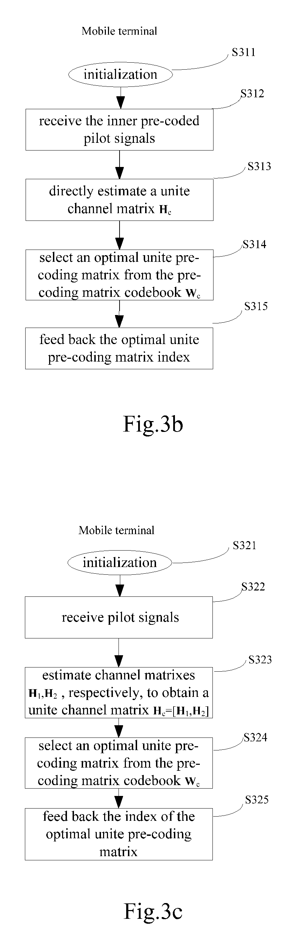

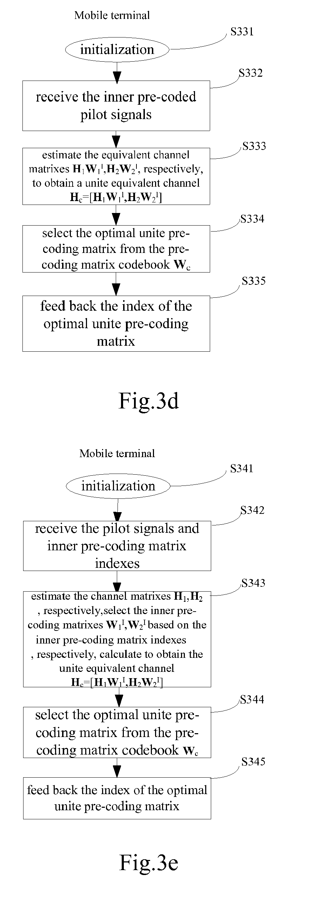

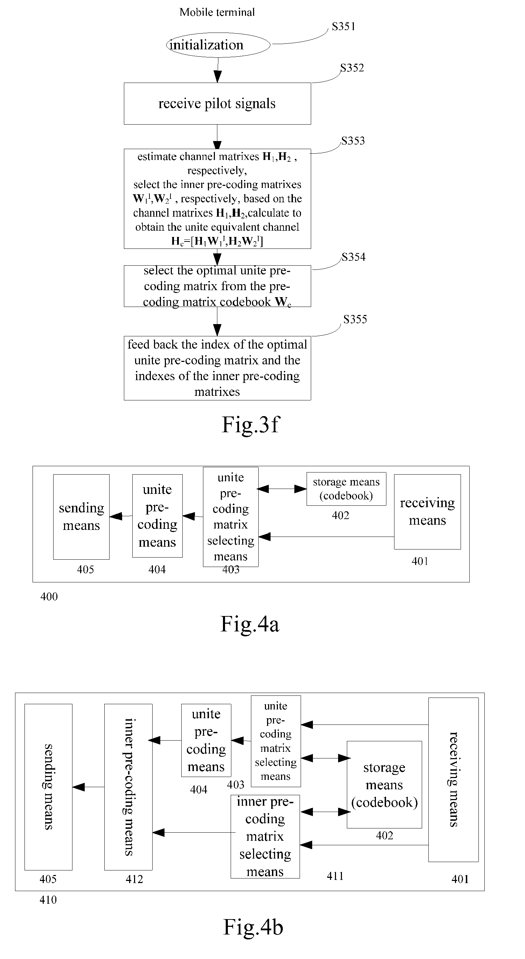

Figs. 2 and 3 illustrate the specific implementation processes of the base station and mobile terminal under different system settings. Hereinafter, the base station flows according to the embodiments of the present invention will be described in detail with reference to Figs. 2a, 2b, 2c, 2d, 2e, and 2f; and correspondingly, with reference to Figs. 3a, 3b, 3c, 3d, 3e, and 3f, the mobile terminal flows according to the embodiments of the present invention is described specifically. In the embodiments of the present invention, the base station flow charts 2a, 2b, 2c, 2d, 2e, 2f exactly correspond to the mobile terminal flow charts 3a, 3b, 3c, 3d, 3e, 3f, respectively. In specific depiction, the base station and the corresponding mobile terminal processing processes are depicted together.

The system settings as illustrated in Fig. 2a (base station) and Fig. 3a (mobile terminal) is as follows: sending pilot signals at the same time-frequency resource, without the inner pre-coding process.

Specifically, in Fig. 2a, at step S201, the base station is initialized; at step S202, a pilot signal is sent, where the pilot signals of the main and slave base station occupy the same time-frequency resource; at step S203, a unite pre-coding matrix index is received from the mobile terminal; at step S204, a corresponding unite pre-coding matrix $W_c$ is selected from the codebook based on the received unite pre-coding matrix index, the dimension of the unite pre-coding matrix being $N \times R$, where R is the rank of the base station to the mobile terminal; at step S205, the base station codes the data using the unite pre-coding matrix before sending, the sent data is $S_i = H_i W_c d_i$, $i =1, 2$, being the master and slave base station indexes, respectively.

Correspondingly, in Fig. 3a, at step S301, the mobile terminal is initiated, at step S302, the mobile terminal receives the pilot signals from the two base stations, where the two pilot signals are at the same time-frequency resource; thus, at step S303, the mobile terminal directly estimates the received pilot signals to obtain the unite channel of the two base stations, which is the sum of $H_1$ and $H_2$, namely, $H_c = H_1 + H_2$, the dimension of $H_c$ being $M \times N$; at step S304, the mobile terminal selects an optimal unite pre-coding matrix $W_c$ from the pre-coding matrix codebook, the dimension of $W_c$ being $N \times R$, where R is the rank to the mobile terminal as determined by the base station unite pre-coding; at step S305, the index of the unite pre-coding matrix is transmitted to respective cooperating base stations.

The system settings as indicated by Fig. 2b (the base station) and Fig. 3b (the mobile terminal) are specified below: sending the pilot signals at the same time-frequency resource, with the inner pre-coding process. Specifically, in Fig. 2b, at step S211, the base station is initiated; at step S212, the base station obtains the inner pre-coding matrix at the base station, and the inner pre-coding matrix of each cooperating base station is determined based on the channels $H_1$ and $H_2$ to the mobile terminal, respectively. In this embodiment, the system works under the time division duplexing mode, and the base station obtains the inner pre-coding matrix in the following manner: the mobile terminal sends an uplink sounding signal, because channels have interchangeability, each cooperating base station may estimate the downlink MIMO physical channel to the mobile terminal and determines an inner pre-coding matrix: $W_1^I$ of the $N \times R_1^I$ dimension, and $W_2^I$ of the $N \times R_2^I$ dimension, wherein $R_1^I$ and $R_2^I$ are ranks to the mobile terminal as determined by the master and slave base station inner pre-coding, respectively, where if the two base stations send pilot signals at the same time-frequency resource, it is required $R_1^I = R_2^I$. Next, at step S212, the cooperating base station further performs inner pre-coding to the pilot signal by using the inner pre-coding matrix, and then transmits the pilot signal, where the pilot signals of the master and slave base station occupy the same time-frequency resource; at step S213, a unite pre-coding matrix index is received; at step S214, the base station selects a corresponding unite pre-coding matrix $W_c$ from the codebook based on the received unite pre-coding matrix index, the dimension of the unite pre-coding matrix $W_c$ is $N \times R_1^I$, wherein $R_1^I = R_2^I$; at step S215, the base station, after encoding the data by using the unite pre-coding matrix, further performs the inner pre-coding process on the data, namely, the unite pre-coded data is inner pre-coded using the inner pre-coding matrix before sending, where the sent data is

$$S_i = H_i W_i^I W_c d_i,\quad i=1,2,$$ which are master and slave base station indexes, respectively.

Correspondingly, in Fig. 3b, at step S311, the mobile terminal is initiated; at step S312, the mobile terminal receives the inner pre-coded pilot signals from two base stations, the two pilot signals being on the same time-frequency resource; thus, at step S313, the mobile terminal directly estimates the received pilot signals to obtain the unite equivalent channel of the two base stations, which is the sum of two equivalent channels,

$H_1 W_1^I$ and $H_2 W_2^I$, namely,

$$H_c = H_1 W_1^I + H_2 W_2^I,$$ where the dimension of $H_c$

is $M \times R_1^I$, $R_1^I = R_2^I$; at step S314, the mobile terminal selects an optimal unite pre-coding matrix $W_c$ from the pre-coding matrix codebook, the dimension of $W_c$

being $N \times R_1^I$; at step S315, the index of the unite pre-coding matrix is sent to each cooperating base station.

The system settings as indicated by Fig. 2c (base station) and Fig. 3c (mobile terminal) are specified below: sending pilot signals on different time frequency resources, without the inner pre-coding process. Specifically, in Fig. 2c, at step S221, the base station is initiated; at step S222, the base station sends a pilot signal, where the pilot signals from the master and slave base stations occupy different time-frequency resources; at step S223, a unite pre-coding matrix index is received from the mobile terminal; at step S224, based on the received unite pre-coding matrix index, the base station selects a corresponding unite pre-coding matrix $W_c$ from the codebook, and further selects the corresponding portion of the matrix as the unite pre-coding matrix of the present base station. The selected unite pre-coding matrix is $W_c$ of the $2N \times R$ dimension, the unite pre-coding matrix $W_{c1}$ of the master base station is the upper half portion of $W_c$ (the first N lines), and the unite pre-coding matrix $W_{c2}$ of the slave base station is the lower half portion of $W_c$ (the last N lines). It should be noted the correspondence relationship between the master and slave base stations and the unite pre-coding matrix blocks is not limited to the above illustration; at step S225, each base station codes the data using the unite pre-coding matrix, respectively, before sending, the sent data being $S_i = H_i W_{ci} d_i$, $i=1,2$, which are master and slave base station indexes, respectively.

Correspondingly, in Fig. 3c, at step S321, the mobile terminal is initiated; at step S322, the mobile terminal receives the pilot signals from two base stations, the two pilot signals being on the different time-frequency resources; thus, at step S323, the mobile terminal estimates the received pilot signals to obtain the channels of the two base stations, which are $H_1$ and $H_2$, and afterwards, and $H_2$ are combined , namely, $H_c$ = [$H_1$, $H_2$], where the dimension of $H_c$ is $M \times 2N$; at step S324, the mobile terminal selects the optimal unite pre-coding matrix from the pre-coding matrix codebook , the dimension of $W_c$ being $2N \times R$; at step S325, the index of the unite pre-coding matrix is sent to each cooperating base station.

The system settings as indicated by Fig. 2d (base station) and Fig. 3d (mobile terminal) is specified below: sending pilot signals at different time frequency resources, with the inner pre-coding process. Specifically, in Fig. 2d, at step S231, the base station is initiated; at step S232, the base station obtains an inner pre-coding matrix, where the process of obtaining an inner pre-coding matrix is illustrated for example at step S212, and the pilot signal, after being inner pre-coded using the inner pre-coding matrix, is sent, wherein the pilot signals of the master and slave base stations occupy different time-frequency resources; at step S233, a unite pre-coding matrix index is received from the mobile terminal; at step S234, a corresponding unite pre-coding matrix is selected from the codebook based on the received unite pre-coding matrix index, and the corresponding portion of the matrix is further selected as the unite pre-coding matrix of the present base station, the selected unite pre-coding matrix being $W_c$ of the $[R_1^I + R_2^I] \times R$ dimension, the unite pre-coding matrix $W_{c1}$ of the master base station is the upper half portion (the first $R_1^I$ lines) of $W_c$, and the unite pre-coding matrix $W_{c2}$ of the slave base station is the lower half part (the last $R_2^I$ lines) of $W_c$. It should be noted that, the correspondence relationship between the master and slave base stations and the unite pre-coding matrix blocks is not limited to the above depiction; at step S235, each base station codes the data using the unite pre-coding matrix, respectively, before sending, the sent data being $S_i = H_i W_i^I W_{ci} d_i$, i=1,2, which are the master and slave base station indexes, respectively.

Correspondingly, in Fig. 3d, at step S331, the mobile terminal is initiated; at step S332, the mobile terminal receives the inner pre-coded pilot signals from two base stations, the two pilot signals being on different time-frequency resources; thus, at step S333, the mobile terminal directly estimates the received pilot signals to obtain the equivalent channels of the two base stations, which are $H_1 W_1^I$ and $H_2 W_2^I$; afterwards, $H_1 W_1^I$ and $H_2 W_2^I$ are combined, namely,

$$H_c = [H_1 W_1^I, H_2 W_2^I]$$, where the dimension of $H_c$ is $M \times [R_1^I + R_2^I]$; at step S334, the mobile terminal selects the optimal unite pre-coding matrix $W_c$ of $[R_1^I + R_2^I] \times R$ dimension from the pre-coding matrix codebook; at step S335, the index of the unite pre-coding matrix is sent to each cooperating base station.

The system settings as indicated by Fig. 2e (base station) and Fig. 3e (mobile terminal) is specified below: sending pilot signals on different time-frequency resources, with the inner pre-coding process. Specifically, in Fig. 2e, at step S241, the base station is initiated; at step S242, the base station obtains the inner pre-coding matrix, where the process of obtaining the inner pre-coding matrix is illustrated at step S212, and next, the base station sends the pilot signal and the inner pre-coding matrix index to the mobile terminal, wherein the pilot signals of the master and slave base stations occupy different time-frequency resources; at step S243, a unite pre-coding matrix index is received from the mobile terminal; at step S244, based on the received unite pre-coding matrix index, a corresponding unite pre-coding matrix is selected from the codebook, and further, the corresponding portion of the matrix is further selected as the unite pre-coding matrix of the present base station, the selected unite pre-coding matrix being $W_c$ of the $[R_1^I + R_2^I] \times R$ dimension, the unite pre-coding matrix $W_{c1}$ of the master base station is the upper half portion (first $R_1^I$ lines) of $W_c$, and the unite pre-coding matrix $W_{c2}$ of the slave base station is the lower half portion (the last $R_2^I$ lines) of $W_c$. It should be noted that the correspondence relationship between the master and slave base stations and the unite pre-coding matrix blocks is not limited to the above depiction; at step S245, each base station codes the data using the unite pre-coding matrix, respectively, before sending, the sent data being $S_i = H_i W_i^I W_{ci} d_i$, i=1,2, which are master and slave base station indexes, respectively.

Correspondingly, in Fig. 3e, at step S341, the mobile terminal is initiated; at step S342, the mobile terminal receives the pilot signals and inner pre-coding matrix indexes from two base stations, where the two pilot signals are on different time-frequency resources; thus, at step S343, the mobile terminal estimates the received pilot signals, respectively, to obtain the channels of the two base stations, which are $H_1$ and $H_2$; next, the mobile terminal, based on the received inner pre-coding matrix indexes, selects the inner pre-coding matrixes $W_1^I$ and

$W_2^I$, respectively, multiplies the channels with the corresponding inner pre-coding matrixes respectively, to obtain the equivalent channels $H_1 W_1^I$ and $H_2 W_2^I$, and then combines $H_1 W_1^I$ and $H_2 W_2^I$ to obtain the unite equivalent channel $H_c = [H_1 W_1^I, H_2 W_2^I]$, the dimension of $H_c$ is $M \times [R_1^I + R_2^I]$; at step S344, the mobile terminal selects the optimal unite pre-coding matrix $W_c$ of the $[R_1^I + R_2^I] \times R$ dimension from the pre-coding matrix codebook; at step S345, the index of the unite pre-coding matrix is sent to each cooperating base station.

The system settings as indicated in Fig. 2f (base station) and 3f (mobile terminal) is specified below: sending pilot signals on different time-frequency resources, with the inner pre-coding process. Specifically, in Fig. 2f, at step S251, the base station is initiated; at step S252, the base station sends a pilot signal, where the pilot signals from the master and slave base stations occupy different time-frequency resources; at step S253, the unite pre-coding matrix index and the inner pre-coding matrix index are received from the mobile terminal; at step S254, based on the received inner pre-coding matrix index, a corresponding inner pre-coding matrix is selected from the codebook, where for the master base station, the matrix is $W_1^I$ of $N \times R_1^I$ dimension, and for the slave base station, the matrix is $W_2^I$ of the $N \times R_2^I$ dimension, and based on the received unite pre-coding matrix index, the corresponding unite pre-coding matrix is selected from the codebook, and the corresponding portion of the matrix is further selected as the unite pre-coding matrix of the present base station; the selected unite pre-coding matrix is $W_c$ of $[R_1^I + R_2^I] \times R$ dimension, the unite pre-coding matrix $W_{c1}$ of the master base station is the upper half part (first $R_1^I$ lines) of $W_c$, and the unite pre-coding matrix $W_{c2}$ of the slave base station is the lower half part (the last $R_2^I$ lines) of $W_c$. It should be noted that the correspondence relationship between the master and slave base stations and the unite pre-coding matrix blocks is not limited to the above depiction; at step S225, each base station codes the data using the unite pre-coding matrix before sending, the sent data being

$$S_i = H_i W_i^I W_{ci} d_i, \quad i=1, 2,$$ which are master and slave base station indexes, respectively.

Correspondingly, in Fig. 3f, at step S351, the mobile terminal is initiated; at step S352, the mobile terminal receives the pilot signals from two base stations, the two pilot signals being on different time-frequency resources; thus, at step S353, the mobile terminal estimates the received pilot signals, respectively, to obtain the channels of the two base stations, which are $H_1$ and $H_2$, respectively; next, the mobile terminal selects the optimal inner pre-coding matrixes $W_1^I$ and $W_2^I$ from the codebook, respectively, then multiplies the channels with the corresponding inner pre-coding matrixes to obtain the equivalent channels $H_1 W_1^I$ and $H_2 W_2^I$, respectively, and then combines $H_1 W_1^I$ and $H_2 W_2^I$ to obtain a unite equivalent channel $H_c = [H_1 W_1^I, H_2 W_2^I]$, where the dimension of $H_c$ is $M \times [R_1^I + R_2^I]$; at step S354, the mobile terminal selects the optimal unite pre-coding matrix $W_c$ of the $[R_1^I + R_2^I] \times R$ dimension from the pre-coding matrix codebook; at step S355, the index of the unite pre-coding matrix and all inner pre-coding matrix indexes are sent to respective cooperating base stations.

Fig. 4a and Fig. 4b illustrate a schematic block diagram of the structure of a base station according to an embodiment of the present invention, respectively.

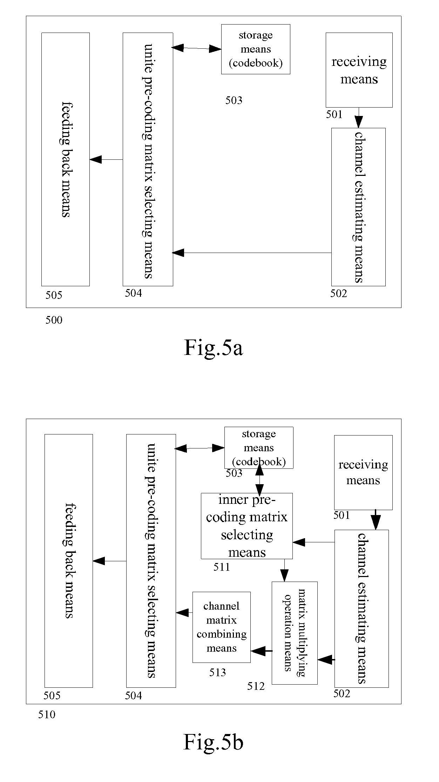

Fig. 5a and Fig. 5b illustrate a schematic block diagram of the structure of a mobile terminal according to an embodiment of the present invention, respectively.

Wherein, the base station of Fig. 4a corresponds to the mobile terminal of Fig. 5a; and Fig. 4a and Fig. 5a correspond to Fig. 2a and Fig. 3a, respectively; the base station of Fig. 4b corresponds to the mobile terminal of Fig. 5b; and Fig. 4b and Fig. 5b correspond to Fig. 2e and Fig. 3e, respectively.

Specifically, in the embodiment of the present invention, the base station 400 is for performing unite pre-coding on the data and sending the data. The base station 400 may comprise receiving means 401, storage means 402, unite pre-coding matrix selecting means 403, unite pre-coding means 404, and sending means 405.

Specifically, the receiving means 401 may be configured to receive a unite pre-coding matrix index; storage means 402 is configured to store at least one pre-coding codebook; the unite pre-coding matrix selecting means 403 is configured to select a unite pre-coding matrix from the codebook in the storage means 402 based on the unite pre-coding matrix index as outputted by the receiving means 401, and output the unite pre-coding matrix to the unite pre-coding means 404; the unite pre-coding means 404 performs unite pre-coding on the data before outputting it to the sending means 405, and then the sending means 405 sends the data out; additionally, the sending means 405 is further configured to send a pilot signal before sending the data.

Correspondingly, the mobile terminal 500 is configured to select a unite pre-coding matrix based on the unite channel estimation and feed back the unite pre-coding matrix index. The mobile terminal 500 may comprise receiving means 501, channel estimating means 502, storage means 503, unite pre-coding matrix selecting means 504, and feeding back means 505.

Specifically, the receiving means 501 is configured to receive pilot signals; the channel estimating means 502 is configured to perform channel estimation on the pilot signals inputted by the receiving means 501, and after obtaining the unite channel, output it to the unite pre-coding matrix selecting means 504; the storage means 503 is configured to store at least one pre-coding codebook; the unite pre-coding matrix selecting means 504 selects an optimal unite pre-coding matrix from the codebook in the storage means 503 based on the unite channel, and outputs the index of the matrix to the feeding back means 505 that performs feedback,

According to the embodiments and examples of the present invention, the base station 400 and mobile terminal 500 may make various changes. Fig. 4b (base station 410) and Fig. 5b (mobile terminal 510) are only one change thereof, respectively, which will be described in detail. Those skilled in the art may simply and intuitively obtain other changes of the base station and the mobile terminal based on the basic concept and the above embodiments, which will not be detailed one by one herein.

In Fig. 4b, besides implementing the basic configuration function of the base station 400, the base station 410 is further configured to perform inner pre-coding matrix selection and inner code the pilot signals/ data. The base station 410 may comprise receiving means 401, storage means 402, unite pre-coding matrix selecting means 403, unite pre-coding means 404, and sending means 405, and further, it may further comprise inner pre-coding matrix selecting means 411 and inner pre-coding means 412.

Specifically, the receiving means 401 is configured to receive the unite pre-coding matrix index and is further configured to receive the uplink sounding signal and estimate the downlink MIMO physical channel from the base station to the mobile terminal; the inner pre-coding selecting means 411 is configured to select an optimal inner pre-coding matrix based on the downlink physical channel estimation; storage means 402 is configured to store at least one pre-coding codebook; the unite pre-coding matrix selecting means 403 is configured to select a unite pre-coding matrix from the codebook in the storage means 402 based on the unite pre-coding matrix index from the receiving means 401, and further, the unite pre-coding matrix selecting means further selects a matrix block corresponding to the present base station from the selected unite pre-coding matrix as the unite pre-coding matrix of the present base station, and then outputs the unite pre-coding matrix of the present base station to the unite pre-coding means 404; the unite pre-coding means 404 performs unite pre-coding on the data, outputs the data to the inner pre-coding means 412; the inner pre-coding means 412 is configured to perform inner pre-coding on the pilot signal based on the inner pre-coding matrix as outputted from the inner pre-coding selecting means 411 and then output it to the sending means 405; the inner pre-coding means 412 is further configured to perform inner pre-coding on the unite pre-coded data from the unite pre-coding means 404 based on the inner pre-coding matrix outputted from the inner pre-coding selecting means 411, and output the inner pre-coded data to the sending means 405; the sending means 405 is configured to send the inner pre-coded pilot signal and data from the inner pre-coding means.

Correspondingly, the mobile terminal 510 is configured to obtain a unite equivalent channel based on the channel estimation and inner pre-coding matrix and select a unite pre-coding matrix, and then feed back the unite pre-coding matrix index. The mobile terminal 510 may comprise receiving means 501, channel estimating means 502, storage means 503, unite pre-coding matrix selecting means 504, and feeding back means 505. Further, it further comprises inner pre-coding matrix selecting means 511, matrix multiplying operation means 512, and channel matrix combining means 513.

Specifically, the receiving means 501 is configured to receive the pilot signals and inner pre-coding matrix indexes; the channel estimating means 502 is configured to perform channel estimation on the pilot signals inputted from the receiving means, respectively, to obtain the estimated physical channels $H_1$ and $H_2$ and output them to the matrix multiplying operation means 512; the storage means 503 is configured to store at least one codebook; the inner pre-coding matrix selecting means 511 is configured to select corresponding inner pre-coding matrixes $W_1^I$ and $W_2^I$ from the codebook in the storage means 503, respectively, based on the inner pre-coding matrix indexes outputted from the receiving means 501, and output the inner pre-coding matrixes to the matrix multiplying operation means 512; the matrix multiplying operation means 512 is configured to perform matrix multiplying operation to the inputted inner pre-coding matrixes and estimated physical channels, respectively, to obtain the equivalent channel estimates $H_1 W_1^I$ and $H_2 W_2^I$, and then output the equivalent channel estimates to the channel matrix combining means 513; the channel matrix combining means 513 is configured to perform matrix combination on the equivalent channel estimates $H_1 W_1^I$ and $H_2 W_2^I$ to obtain the unite equivalent channel

$$H_c = [H_1 \dot{W}_1^I, H_2 W_2^I]$$ , and then output it to the unite pre-coding matrix selecting means 504; the unite pre-coding matrix selecting means 504 selects the optimal unite pre-coding matrix from the codebook in the storage means 503 based on the unite equivalent channel, and outputs the index of the matrix to the feeding back means 505, and the feeding back means 505 feeds back the index.

In the above embodiments, the codebook for selecting a unite pre-coding matrix and the codebook for selecting an inner pre-coding matrix may be identical or different.

Hereinafter, the required dimension of the codebook in the present invention will be analyzed: in the present invention, in an embodiment without the inner pre-coding process, in case that a unite channel is obtained by summing the estimated physical channels, in other words, $H_c = H_1 + H_2$, the dimension of $H_c$ is $M \times N$; in case that a unite channel is obtained through combining the estimated physical channels, in other words, $H_c = [H_1, H_2]$, the dimension of $H_c$ is $M \times 2N$; while in the embodiment with an inner pre-coding process, in case that a unite channel is obtained through summing the estimated physical channels, in other words,

$$H_c = H_1 W_1^I + H_2 W_2^I$$ , the dimension of $H_c$ is $M \times R_1^I$ , $R_1^I = R_2^I$ ; in case that a unite channel is obtained through combining the estimated physical channels, in other words, $H_c = [H_1 W_1^I, H_2 W_2^I]$ ,

the dimension of $H_c$ is $M \times [R_1^I + R_2^I]$ . Given

$R_1^I + R_2^I \leq N$ , through the inner pre-coding process, the dimension of the pre-coding codebook may be decreased, the pre-coding matrix codebook storage space may be reduced, and the implementation complexity may be further lowered.

Additionally, the system may adapt the amount of data flow based on the settings when sending the data flow; in this case, the ranks of the pre-coding matrixes, which comprise the unite pre-coding matrix and the inner pre-coding matrix, must also be adapted, then when sending the pre-coding matrix indexes, the mobile terminal and cooperating base stations must also send the ranks of respectively pre-coding matrixes; when selecting a pre-coding matrix in the codebook, the selection must also be made in conjunction with the rank of the pre-coding matrix. This rank adaptation part has many embodiments in the prior art and thus will not be detailed in the embodiments of the present invention. However, those skilled in the art may simply and intuitively implement the present invention with rank adaptation based on the above depiction; with or without the rank adaptation, it is a variation within the technical scope of the present invention and should not be understood as the limitation to the present invention.

The codebook-based multi-base station unite pre-coding scheme according to the present invention considers the channel condition between all base stations and the mobile terminal; it mitigates the interference caused by time-frequency resource multiplexing and enhances the user performance; moreover, the inner pre-coding is used to further enhance the performance of the mobile terminal commonly served by the cooperating base stations. Besides, through the inner pre-coding process, the dimension of the pre-coding codebook may be decreased, the storage space for the pre-coding matrix codebook may be reduced, and the implementation complexity may be further lowered.

The present invention may be implemented by hardware, software, firmware, and their combination. The skilled in the art should know that the present invention may also be embodied in a computer program product set on a signal carrying medium usable for any suitable data processing system. Such signal bearing medium may be a transmission medium or a recordable medium for computer-readable information, including a magnetic medium, an optical medium, or other suitable medium. Examples of recordable mediums include: a magnetic disk or floppy disk in a hard disk driver, an optical disk for a CD driver, a magnetic tape, and other medium that can be contemplated by the skilled in the art. The skilled in the art should understand that any communication apparatus with an appropriate programming apparatus can implement steps of the method of the present invention as embodied in the program product.

It is to be understood from the foregoing description that modifications and alterations may be made to the respective embodiments of the present invention without departing from the spirit of the present invention. The description in the present specification is intended to be illustrative and not limiting. The scope of the present invention is limited by the appended claims only.

**Claims**

1. A codebook-based multi-base station unite pre-coding method, comprising:

the mobile terminal estimates channels from different cooperating base stations to obtain a unite channel matrix $\mathbf{H}_c$;
the mobile terminal, based on the estimated unite channel matrix, selects an optimal unite pre-coding matrix $\mathbf{W}_c$ from a pre-coding matrix codebook;
the mobile terminal feeds an index of the unite pre-coding matrix back to the cooperating base stations;

the corresponding cooperating base station, based on the received index of the unite precoding matrix, selects a unite pre-coding matrix from the pre-coding matrix codebook, and performs unite pre-coding on data using the unite pre-coding matrix before sending the data to the mobile terminal.

2. The method according to claim 1, wherein the mobile terminal estimates channels from different cooperating base stations to obtain the unite channel matrix $H_c$ means
the mobile terminal directly estimates the channels from different cooperating base stations, the result of the channel estimation being the unite channel matrix $H_c$.

3. The method according to claim 2, wherein the unite channel matrix $H_c$ is an inner pre-coded equivalent unite channel matrix.

4. The method according to claim 1, wherein the mobile terminal estimates channels from different cooperating base stations to obtain the unite channel matrix $H_c$ means:

the mobile terminal estimates the channels from different cooperating base stations, respectively, to obtain physical channel matrixes $H_i$ from each cooperating base station to the mobile terminal, and combines each physical channel matrix to obtain the unite channel matrix $H_c = [H_1, ..., H_k]$, wherein $K > 1$ indicates the number of cooperating base stations serving the mobile terminal, $1 \le i \le K$.

5. The method according to claim 1, wherein the mobile terminal estimates channels from different cooperating base stations to obtain the unite channel matrix $H_c$ means:

the mobile terminal estimates the channels from different cooperating base stations, respectively, to directly obtain equivalent channel matrixes $H_i W_i^I$ from each cooperating base station to the mobile terminal, and combines each equivalent channel matrix to obtain an equivalent unite channel matrix,

$$H_c = [H_1 W_1^I, \cdots, H_K W_K^I]$$, wherein $K > 1$ indicates the number of cooperating base stations serving the mobile terminal, $1 \le i \le K$.

6. The method according to claim 1, wherein the mobile terminal estimates channels from different cooperating base stations to obtain the unite channel matrix

$H_c$ means:

the mobile terminal estimates channels from different cooperating base stations to obtain physical channel matrixes $H_i$;
the mobile terminal receives signals from different cooperating base stations to obtain inner pre-coding matrixes $W_i^I$;
the mobile terminal multiplies the inner pre-coding matrixes $W_i^I$ with the estimated physical channel matrixes $H_i$, respectively, to obtain equivalent channel matrixes $H_i W_i^I$ of cooperating base stations after being inner pre-coded, and combines the equivalent channel matrix from each cooperating base station to obtain the unite channel matrix

$$H_c = [H_1 W_1^I, \cdots, H_K W_K^I]$$, wherein $K > 1$
indicates the number of cooperating base stations serving the mobile terminal, $1 \le i \le K$.

7. The method according to claim 6, wherein the mobile terminal receives signals from different cooperating base stations to obtain inner pre-coding matrixes $W_i^I$ that the mobile terminal selects the inner pre-cording matrixes $W_i^I$ from a pre-coding matrix codebook based on the estimated physical channel matrixes $H_i$.

8. The method according to any one of claims 1-7, wherein the mobile terminal feeds the index of the unite pre-coding matrix back to the base stations means that the mobile terminal directly feeds the index of the unite pre-coding matrix back to all cooperating base stations.

9. The method according to any one of claims 1-7, wherein the mobile terminal feeds the index of the unite pre-coding matrix back to the base stations means that the mobile terminal feeds the index of the unite pre-coding matrix index to the master base station, and the master base station transmits the index of the unite pre-coding matrix to the slave base stations.

10. The method according to claim 8 or 9, wherein the index of the unite pre-coding matrix means an unite pre-coding matrix index and inner pre-coding matrix indexes.

11. The method according to any one of claims 1 - 10, wherein further, that each cooperating base station performs unite pre-coding on data by using the unite pre-coding matrix means performing unite pre-coding on the data by using a corresponding matrix block in the unite pre-coding matrix.

12. The method according to any one of claims 1-11, wherein further, the data, after being unite pre-coded, is inner pre-coded using the inner pre-coding matrix before being sent to the mobile terminal.

13. A mobile terminal comprising:

    storage means, for storing at least one pre-coding matrix codebook;
    channel estimating means, for estimating channels from different cooperating base stations to obtain a unite channel matrix $\mathbf{H}_c$;
    pre-coding matrix selecting means, for selecting a unite pre-coding matrix from the pre-coding matrix codebook based on the estimated unite channel matrix:

        feeding back means, for feeding an index of the unite pre-coding matrix back to the cooperating base stations.

14. The mobile terminal according to claim 13, wherein the channel estimating means is for directly estimating the channels from different cooperating base stations, the result of the channel estimation being the unite channel matrix $\mathbf{H}_c$.

15. The mobile terminal according to claim 14, wherein the unite channel matrix $\mathbf{H}_c$ estimated by the channel estimating means is inner pre-coded equivalent channel matrix.

16. The mobile terminal according to claim 13, wherein, the channel estimating means is for estimating the channels from different cooperating base stations, respectively, to obtain physical channel matrixes $\mathbf{H}_i$ from each cooperating base station to the mobile terminal; further comprising a channel matrix combining means, for combining each physical channel matrix to obtain the unite channel matrix $\mathbf{H}_c = [\mathbf{H}_1, \cdots, \mathbf{H}_k]$, wherein $K > 1$ indicates the number of cooperating base stations serving the mobile terminal, $1 \leq i \leq K$.

17. The mobile terminal according to claim 13, wherein, the channel estimating means is for estimating the channels from different cooperating base stations to directly obtain equivalent channel matrixes $\mathbf{H}_i \mathbf{W}_i^I$ from each cooperating base station to the mobile terminal;
further comprising a channel matrix combining means, for combining each equivalent channel matrix to obtain an equivalent unite channel matrix

$$\mathbf{H}_c = [\mathbf{H}_1 \mathbf{W}_1^I, \cdots, \mathbf{H}_K \mathbf{W}_K^I]$$, wherein $K > 1$ indicates the number of cooperating base stations serving the mobile terminal, $1 \leq i \leq K$

18. The mobile terminal according to claim 13, wherein, the channel estimating means is for estimating channels from different cooperating base stations, respectively, to obtain physical channel matrixes $\mathbf{H}_i$ from each cooperating base station;
further comprising a matrix multiplying operation means, for multiplying the channel matrixes $\mathbf{H}_i$ and the inner pre-coding matrixes $\mathbf{W}_i^I$ received from the cooperating base stations by the mobile terminal, respectively, to obtain the inner pre-coded equivalent channel matrixes $\mathbf{H}_i \mathbf{W}_i^I$; further comprising a channel matrix combining means, for combining each equivalent channel matrix to obtain an equivalent unite channel matrix

$$\mathbf{H}_c = [\mathbf{H}_1 \mathbf{W}_1^I, \cdots, \mathbf{H}_K \mathbf{W}_K^I]$$, wherein $K > 1$ indicates the number of cooperating base stations serving the mobile terminal, $1 \leq i \leq K$

19. The mobile terminal according to claim 18, further comprising an inner pre-coding matrix selecting means, for selecting inner pre-coding matrixes $\mathbf{W}_i^I$ from the pre-coding matrix codebook based on the physical channel matrixes $\mathbf{H}_i$ obtained by the channel estimating means;
the matrix multiplying operation means is for multiplying the physical channel matrixes $\mathbf{H}_i$ with the inner pre-coding matrixes $\mathbf{W}_i^I$ outputted from the corresponding pre-coding matrix selecting means, respectively, to obtain the inner pre-coded equivalent channel matrixes $\mathbf{H}_i \mathbf{W}_i^I$.

20. The mobile terminal according to any one of claims 13-19, wherein the feeding back means is for directly feeding the index of the unite pre-coding matrix to all cooperating base stations.

21. The mobile terminal according to any one of claims 13-19, wherein the feeding back means is for feeding the index of the unite pre-coding matrix to the master base station.

22. The mobile terminal according to claim 20 or 21, wherein the feeding back means further feeds back the indexes of the inner pre-coding matrixes $\mathbf{W}_i^I$.

23. A base station, comprising:

storage means, for storing at least one pre-coding matrix codebook;

receiving means, for receiving a signal that comprises information regarding at least one pre-coding matrix index;

unite pre-coding matrix selecting means, for selecting an optimal unite pre-coding matrix from a pre-coding matrix codebook based on the unite pre-coding matrix index;

unite pre-coding means, for performing unite pre-coding on data using a pre-coding matrix;

sending means, for sending a pilot signal and unite pre-coded data.

24. The base station according to claim 23, wherein the pre-coding matrix selecting means further comprises a matrix block selecting means, for selecting a matrix block corresponding to the present base station from the selected optimal pre-coding matrix as the optimal unite pre-coding matrix.

25. The base station according to claim 23 or 24, wherein:

the receiving means is further for receiving information regarding at least one inner pre-coding matrix index, and selecting a corresponding inner pre-coding matrix index as the inner pre-coding matrix index of the present base station; further, the base station further comprises an inner pre-coding matrix selecting means, for selecting an optimal inner pre-coding matrix from the pre-coding matrix codebook based on the inner pre-coding matrix index of the present base station.

26. The base station according to claim 23 or 24, further comprising:

inner pre-coding matrix generating means, for generating an inner pre-coding matrix based on the received signal.

27. The base station according to claim 25 or 26, further comprising:

inner pre-coding means, for performing inner pre-coding on the pilot signal and/or unite pre-coded data using the inner pre-coding matrix;

the sending means is for sending the inner pre-coded pilot signal and/or data.

28. A codebook-based multi-base station unite pre-coding matrix selection method, comprising:

the mobile terminal estimates channels from different cooperating base stations to obtain a unite channel matrix $\mathbf{H}_c$;

the mobile terminal, based on the estimated unite channel matrix, selectes an optimal unite pre-coding matrix $\mathbf{W}_c$ from the pre-coding matrix codebook;

the mobile terminal feeds an index of the unite pre-coding matrix back to the cooperating base stations;

29. The codebook-based multi-base station unite pre-coding matrix selection method according to claim 28, wherein the mobile terminal estimates channels from different cooperating base stations to obtain the unite channel matrix $\mathbf{H}_c$ means that

the mobile terminal directly estimates the channels from different cooperating base stations, the result of the channel estimation being just the unite channel matrix $\mathbf{H}_c$.

30. The codebook-based multi-base station unite pre-coding matrix selection method according to claim 29, wherein the unite channel matrix $\mathbf{H}_c$ is an inner pre-coded equivalent unite channel matrix.

31. The codebook-based multi-base station unite pre-coding matrix selection method according to claim 28, wherein the mobile terminal estimates channels from different cooperating base stations to obtain the unite channel matrix $\mathbf{H}_c$ means that

the mobile terminal estimates channels from different cooperating base stations, respectively, to obtain physical channel matrixes $\mathbf{H}_i$ from each cooperating base station to the mobile terminal, and combines each physical channel matrix to obtain the unite channel matrix $\mathbf{H}_c =[\mathbf{H}_1,\cdots,\mathbf{H}_K]$, wherein $K > 1$ indicates the number of cooperating base stations serving the mobile terminal, $1 \le i \le K$.

32. The codebook-based multi-base station unite pre-coding matrix selection method according to claim 28, wherein the mobile terminal estimates channels from different cooperating base stations to obtain the unite channel matrix $\mathbf{H}_c$ means that

the mobile terminal estimates channels from different cooperating base stations, respectively to directly obtain equivalent channel matrixes $\mathbf{H}_i\mathbf{W}_i^I$ from each cooperating base station to the mobile terminal, and combines each equivalent channel matrix to obtain an equivalent unite channel matrix, $\mathbf{H}_c =[\mathbf{H}_1\mathbf{W}_1^I,\cdots,\mathbf{H}_K\mathbf{W}_K^I]$, wherein $K > 1$ in-

dicates the number of cooperating base stations serving the mobile terminal, $1 \le i \le K$.

33. The codebook-based multi-base station unite pre-coding matrix selection method according to claim 28, wherein the mobile terminal estimates channels from different cooperating base stations to obtain the unite channel matrix $\mathbf{H}_c$ means that:

the mobile terminal estimates channels from different cooperating base stations, respectively, to obtain physical channel matrixes $\mathbf{H}_i$;
the mobile terminal receives signals from different cooperating base stations to obtain inner pre-coding matrixes $\mathbf{W}_i^I$;
the mobile terminal multiplies the inner pre-coding matrixes $\mathbf{W}_i^I$ with the estimated physical channel matrixes $\mathbf{H}_i$ to obtain equivalent channel matrixes $\mathbf{H}_i \mathbf{W}_i^I$ from each cooperating base station after being inner pre-coded, and combines the equivalent channel matrix from each cooperating base station to obtain the unite channel matrix $\mathbf{H}_c = [\mathbf{H}_1 \mathbf{W}_1^I, \cdots, \mathbf{H}_K \mathbf{W}_K^I]$, wherein $K > 1$ indicates the number of cooperating base stations serving the mobile terminal, $1 \le i \le K$.

34. The codebook-based multi-base station unite pre-coding matrix selection method according to claim 29, wherein the mobile terminal receives signals from different cooperating base stations to obtain inner pre-coding matrixes $\mathbf{W}_i^I$ means that the mobile terminal selects inner pre-coding matrixes $\mathbf{W}_i^I$ from the pre-coding matrix codebook based on the estimated physical channel matrixes $\mathbf{H}_i$.

35. The codebook-based multi-base station unite pre-coding matrix selection method according to any one of claims 28-34, wherein the mobile terminal feeds the index of the unite pre-coding matrix back to the base stations means that the mobile terminal directly feeds the index of the unite pre-coding matrix back to all cooperating base stations.

36. The codebook-based multi-base station unite pre-coding matrix selection method according to any one of claims 28-34, wherein the mobile terminal feeds the index of the unite pre-coding matrix back to the base stations means that the mobile terminal feeds the index of the unite pre-coding matrix back to the master base station.

37. The codebook-based multi-base station unite pre-coding matrix selection method according to claim 35 or 36, wherein the index of the unite pre-coding matrix means a unite pre-coding matrix index and inner pre-coding matrix indexes.

38. A codebook-based base station pre-coding method, comprising:

the base station sends a pilot signal;
the base station receives a signal that comprises information regarding at least one unite pre-coding matrix index;
the base station selects an optimal unite pre-coding matrix from a pre-coding matrix codebook based on the unite pre-coding matrix index;
the base station performs unite pre-coding on data using the unite pre-coding matrix;
the base station sends the unite pre-coded data.

39. The codebook-based base station pre-coding method according to claim 38, wherein further, the base station selects a corresponding matrix block from the selected optimal unite pre-coding matrix as the optimal unite pre-coding matrix.

40. The codebook-based base station pre-coding method according to claim 38 or 39, wherein further, the base station further receives information regarding at least one inner pre-coding matrix index and selects a corresponding inner pre-coding matrix index as the inner pre-coding matrix index of the present base station and selects the optimal inner pre-coding matrix from a pre-coding matrix codebook based on the inner pre-coding matrix index of the present base station.

41. The codebook-based base station pre-coding method according to claim 38 or 39, further comprising:

the base station generates an inner pre-coding matrix based on the received signal.

42. The codebook-based base station pre-coding method according to claim 40 or 41, wherein further, the base station performs inner pre-coding on the pilot signal and/or unite pre-coded data using the inner pre-coding matrix; and sends the inner pre-coded pilot signal and/or data.

Fig.1

Fig.2a

Base station

initialization ⟋ S211

obtain an inner pre-coding matrix, and
perform inner pre-coding on the pilot
signal before sending ⟋ S212

receive a unite pre-coding
matrix index ⟋ S213

select a unite pre-coding
matrix ⟋ S214

perform unite pre-coding and
inner pre-coding on the user
data before sending ⟋ S215

Fig.2b

Base station

initialization ⟋ S221

send a pilot signal ⟋ S222

receive a unite pre-coding
matrix index ⟋ S223

select a corresponding block of the
unite pre-coding matrix as the unite
pre-coding matrix of the present base
station ⟋ S224

perform unite pre-coding on
user data before sending ⟋ S225

Fig.2c

Base station

initialization — S231

↓

obtain an inner per-coding matrix and inner code the pilot signal — S232

↓

receive a unite pre-coding matrix index — S233

↓

select a corresponding block of the unite pre-coding matrix as the unite pre-coding matrix of the present base station — S234

↓

perform unite pre-coding and inner pre-coding on the user data before sending — S235

Fig.2d

Base station

initialization — S241

↓

obtain an inner pre-coding matrix, send an inner pre-coding matrix index and a pilot signal — S242

↓

receive a unite pre-coding matrix index — S243

↓

select a corresponding block of the unite pre-coding matrix as the unite pre-coding matrix of the present base station — S244

↓

perform unite pre-coding and inner pre-coding on the user data before sending — S245

Fig.2e

Base station

initialization — S251

↓

send a pilot signal — S252

↓

receive the unite pre-coding matrix index and the inner pre-coding matrix index — S253

↓

select an inner pre-coding matrix, select a corresponding block of the unite pre-coding matrix as the unite pre-coding matrix of the present base station — S254

↓

perform unite pre-coding and inner pre-coding on the user data before sending — S255

Fig.2f

Mobile terminal

initialization — S301

↓

receive pilot signals — S302

↓

directly estimate a unite channel matrix $\mathbf{H_c}$ — S303

↓

select the optimal unite pre-coding matrix from the pre-coding matrix codebook $\mathbf{Wc}$ — S304

↓

feed back the index of the optimal unite pre-coding matrix — S305

Fig.3a

Mobile terminal

initialization — S311

↓

receive the inner pre-coded pilot signals — S312

↓

directly estimate a unite channel matrix $\mathbf{H}_c$ — S313

↓

select an optimal unite pre-coding matrix from the pre-coding matrix codebook $\mathbf{W}_c$ — S314

↓

feed back the optimal unite pre-coding matrix index — S315

Fig.3b

Mobile terminal

initialization — S321

↓

receive pilot signals — S322

↓

estimate channel matrixes $\mathbf{H}_1, \mathbf{H}_2$, respectively, to obtain a unite channel matrix $\mathbf{H}_c = [\mathbf{H}_1, \mathbf{H}_2]$ — S323

↓

select an optimal unite pre-coding matrix from the pre-coding matrix codebook $\mathbf{W}_c$ — S324

↓

feed back the index of the optimal unite pre-coding matrix — S325

Fig.3c

Mobile terminal

initialization    S331

receive the inner pre-coded
pilot signals    S332

estimate the equivalent channel
matrixes $\mathbf{H}_1\mathbf{W}_1{}^I, \mathbf{H}_2\mathbf{W}_2{}^I$, respectively,
to obtain a unite equivalent channel
$\mathbf{H}_c = [\mathbf{H}_1\mathbf{W}_1{}^I, \mathbf{H}_2\mathbf{W}_2{}^I]$    S333

select the optimal unite pre-
coding matrix from the pre-
coding matrix codebook $\mathbf{W}_c$    S334

feed back the index of the
optimal unite pre-coding
matrix    S335

## Fig.3d

Mobile terminal

initialization    S341

receive the pilot signals and
inner pre-coding matrix
indexes    S342

estimate the channel matrixes $\mathbf{H}_1, \mathbf{H}_2$
, respectively, select the inner pre-
coding matrixes $\mathbf{W}_1{}^I, \mathbf{W}_2{}^I$ based on the
inner pre-coding matrix indexes
, respectively, calculate to obtain the
unite equivalent channel
$\mathbf{H}_c = [\mathbf{H}_1\mathbf{W}_1{}^I, \mathbf{H}_2\mathbf{W}_2{}^I]$    S343

select the optimal unite pre-
coding matrix from the pre-
coding matrix codebook $\mathbf{W}_c$    S344

feed back the index of the optimal
unite pre-coding matrix    S345

## Fig.3e

Mobile terminal

initialization — S351

receive pilot signals — S352

estimate channel matrixes $H_1, H_2$, respectively,
select the inner pre-coding matrixes
$W_1^I, W_2^I$, respectively, based on the
channel matrixes $H_1, H_2$, calculate to
obtain the unite equivalent channel
$H_c=[H_1 W_1^I, H_2 W_2^I]$ — S353

select the optimal unite pre-coding matrix from the pre-coding matrix codebook $W_c$ — S354

feed back the index of the optimal unite pre-coding matrix and the indexes of the inner pre-coding matrixes — S355

Fig.3f

sending means 405 — unite pre-coding means 404 — unite pre-coding matrix selecting means 403 — storage means (codebook) 402 — receiving means 401

400

Fig.4a

sending means 405 — inner pre-coding means 412 — unite pre-coding means 404 — unite pre-coding matrix selecting means 403 — inner pre-coding matrix selecting means 411 — storage means (codebook) 402 — receiving means 401

410

Fig.4b

Fig.5a

Fig.5b

EP 2 372 925 A1

# INTERNATIONAL SEARCH REPORT

| | International application No. |
|---|---|
| | PCT/CN2008/002150 |

**A. CLASSIFICATION OF SUBJECT MATTER**

H04B 7/04 (2006.01) i

According to International Patent Classification (IPC) or to both national classification and IPC

**B. FIELDS SEARCHED**

Minimum documentation searched (classification system followed by classification symbols)

IPC: H04B7/-，H04L1/06

Documentation searched other than minimum documentation to the extent that such documents are included in the fields searched

Electronic data base consulted during the international search (name of data base and, where practicable, search terms used)

CNKI;CPRS;WPI；EPODOC；PAJ：COOPERATING BASE STATION UNITE PRE-CODING PRE-CODING PRECODING MULTIPLE INPUT MULTIPLE OUTPUT MIMO FEEDBACK MATRIX CODEBOOK CHANNEL MATRIX

**C. DOCUMENTS CONSIDERED TO BE RELEVANT**

| Category* | Citation of document, with indication, where appropriate, of the relevant passages | Relevant to claim No. |
|---|---|---|
| A | CN101136718A （ZHONGXING COMMUNICATION CO LTD） 05 Mar. 2008（05.03.2008） Claim 1, description page 4 line 6-page 8 line 12, fig.1 | 1-42 |
| A | EP1699145A2 (SAMSUNG ELECTRONICS CO LTD ) 06 Sep. 2006(06.09.2006) The whole description | 1-42 |
| A | EP1956780A2 (BROADCOM CORP ) 13 Aug. 2008(13.08.2008) The whole description | 1-42 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 21 Sep. 2009 (21.09.2009) | **15 Oct. 2009 (15.10.2009)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **LIU,Shiru** Telephone No. (86-10)62411317 |

Form PCT/ISA /210 (second sheet) (July 2009)

## INTERNATIONAL SEARCH REPORT
### Information on patent family members

| | International application No. |
|---|---|
| | PCT/CN2008/002150 |

| Patent Documents referred in the Report | Publication Date | Patent Family | Publication Date |
|---|---|---|---|
| CN101136718A | 05.03.2008 | NONE | |
| EP1699145A2 | 06.09.2006 | US2006209980A1 | 21.09.2006 |
| | | KR20060096360A | 11.09.2006 |
| EP1956780A2 | 13.08.2008 | US2008192853A1 | 14.08.2008 |
| | | CN101262456A | 10.09.2008 |
| | | KR20080075442A | 18.08.2008 |
| | | EP1956780A3 | 06.05.2009 |
| | | US2008192717A1 | 14.08.2008 |

Form PCT/ISA /210 (patent family annex) (July 2009)